# EUROPEAN PATENT APPLICATION

(11) **EP 4 485 652 A2**
(43) Date of publication of application: **01.01.2025**
(21) Application number: 24166908.4
(22) Date of filing: 27.03.2024
(51) Int. Cl.: H01M 50/242, B60L 50/64, H01M 50/249, H01M 50/262, H01M 50/296, H01M 50/528, H01R 13/00

(54) **POWER BATTERY PACK**

(30) Priority: 30.06.2023 CN 202321712402 U
(71) Applicant: Eve Energy Co., Ltd., Huizhou, Guangdong 516006 (CN)
(72) Inventor: LI, Wenhang, Huizhou, 516006 (CN); LUO, Kun, Huizhou, 516006 (CN); CHEN, Zhiwei, Huizhou, 516006 (CN); CHEN, Zhaohai, Huizhou, 516006 (CN); HUANG, Liliang, Huizhou, 516006 (CN); ZHU, Rongzhan, Huizhou, 516006 (CN); DING, Quanhua, Huizhou, 516006 (CN); RAO, Yan, Huizhou, 516006 (CN)
(74) Representative: Murgitroyd & Company

(57) **Abstract**

A power battery pack (100) is provided. The power battery pack (100) includes a case (10), a high-voltage connector (30) and a limiting frame (40) disposed in the case (10). The high-voltage connector (30) includes a base (31). A first surface (3101) of the base (31) faces to the top wall of the case (10). The limiting frame (40) is attached to the sidewall of the case (10). The limiting frame (40) is at least connected to a second surface (3102) of the base (31) to limit the base (31). By adding a limiting frame (40) inside the case (10), the limiting frame (40) limits the high-voltage connector (30) in the direction of the high-voltage connector (30) acted by the external force, thereby avoiding the loosening of the connection between the high-voltage connector (30) and other devices due to shaking.

## Description

### FIELD OF INVENTION

The present disclosure relates to a field of battery technology, and particularly relates to a power battery pack.

### BACKGROUND OF INVENTION

The high-voltage connector is the power transmission unit of the power battery pack, and the power battery pack transmits the power electric energy to the whole vehicle through the high-voltage connector, therefore, the high-voltage connector is a power transmission bridge between the internal of the power battery pack and the high-voltage equipment of the external whole vehicle. In the related technology, the high-voltage connector is connected to the top wall of the cell of the power battery pack through bolts, so that the high-voltage connector is suspended in the containing cavity of the case, and the high-voltage connector can be electrically connected to other devices inside the power battery pack to realize the output of the power electric energy. However, based on the design that the high-voltage connector relies on the bolt connection with the top wall of the case to realize the suspension support, if the bolt comes loose, the high-voltage connector will shake or skew under the action of external force, such as the gravity pull of other devices connected to the high-voltage connector, which will lead to the looseness of the connection between the high-voltage connector and other devices, and affect the stability of the electrical connection between other devices and the high-voltage connector.

### SUMMARY OF INVENTION

The embodiments of the present disclosure provide a power battery pack, which can solve the problem that the high-voltage connector shakes under the action of external force.

The embodiments of the present disclosure provide a power battery pack, which includes a case, a high-voltage connector and a limiting frame disposed in the case.

The high-voltage connector includes a base, and a first surface of the base faces to a top wall of the case.

The limiting frame is attached to a sidewall of the case. The limiting frame is at least connected to a second surface of the base to limit the base. The first surface of the base is opposite to the second surface of the base.

In some embodiments, the limiting frame includes a support plate. The support plate is provided with a limiting part, and the limiting part is nested with at least a part of the base.

In some embodiments, the limiting part includes a first limiting sub-part. A side edge of the support plate is recessed to form the first limiting sub-part.

In some embodiments, the side edge includes a first sub-side edge and a second sub-side edge. The first sub-side edge is smoothly connected to the second sub-side edge. The second sub-side edge is recessed to form the first limiting sub-part.

In some embodiments, the limiting part further includes a second limiting sub-part in a shape of a hole.

In some embodiments, the base includes a protrusion. The protrusion is nested with the limiting part.

In some embodiments, the limiting frame further includes a first connecting plate and a second connecting plate. The first connecting plate is attached to the sidewall of the case. The second connecting plate is connected to the first connecting plate. The second connecting plate is connected to the support plate.

In some embodiments, a first included angle is formed between the second connecting plate and the first connecting plate, and the first included angle is an obtuse angle.

In some embodiments, the limiting frame further includes a reinforcing plate, the reinforcing plate is connected to the support plate. The reinforcing plate is connected to the second connecting plate.

In some embodiments, the support plate, the first connecting plate, the second connecting plate and the reinforcing plate are integrally formed. In some embodiments, the support plate includes a support main body plate and a support extension plate. The support main body plate is connected to the support extension plate. The support extension plate abuts against the sidewall of the case. The support main body plate is connected to the second connecting plate. At least one of the support main body plate and the support extension plate is provided with the limiting part.

In some embodiments, the support plate further includes an extension connecting plate connected to the support extension plate. The extension connecting plate is attached to the sidewall of the case.

In some embodiments, the power battery pack further includes a buffer layer. The buffer layer is disposed between the limiting frame and the base.

In some embodiments, an orthographic projection of the buffer layer coincides with an orthographic projection of the support body plate, or the orthographic projection of the buffer layer coincides with an orthographic projection of the support body plate and the support extension plate.

In some embodiments, the power battery pack further includes a conductive member and a battery disposed in the case. The high-voltage connector is connected to the conductive member to suspend and support the high-voltage connector in the case. The conductive member is connected to the battery.

Beneficial effects of the embodiments of the present disclosure are as follows: A limiting frame is added inside the case of the power battery pack, the limiting frame is attached to the sidewall of the case, and the limiting frame is connected to the base of the high-voltage connector, so that the limiting frame limits the high-voltage connector in the direction in the direction of the high-voltage connector acted by the external force, thus avoiding the high-voltage connector from shaking due to the pulling of the external force, thereby avoiding the loosening of the connection between the high-voltage connector and other devices due to the high-voltage connector shaking, and ensuring the stability of the electrical connection between the high-voltage connector of the power battery pack and other devices.

### DESCRIPTION OF DRAWINGS

FIG. 1 is a structural explosion view of a configuration of a power battery pack provided by an embodiment of the present disclosure.
FIG. 2 is an explosion view of the power battery pack shown in FIG. 1 from another perspective.
FIG. 3 is an enlarged schematic view at A in FIG. 2.
FIG. 4 is a perspective view of a limiting frame shown in FIGs. 1 and 2.
FIG. 5 is a top view of the limiting frame shown in FIG. 4.
FIG. 6 is a first side view of the limiting frame shown in FIG. 4.
FIG. 7 is a second side view of the limiting frame shown in FIG. 4.
FIG. 8 is a perspective view of the limiting frame shown in FIGs. 1 and 2 from another perspective.
FIG. 9 is an explosion view of the limiting frame and a buffer layer shown in FIGs. 1 and 2.

### DETAILED DESCRIPTION OF EMBODIMENTS

The technical solutions in the embodiments of the present disclosure will be described below in conjunction with the accompanying drawings in the embodiments of the present disclosure. The described embodiments are just used for explaining the ideas of the present disclosure, and should not be construed as limiting the scope of protection of the present disclosure.

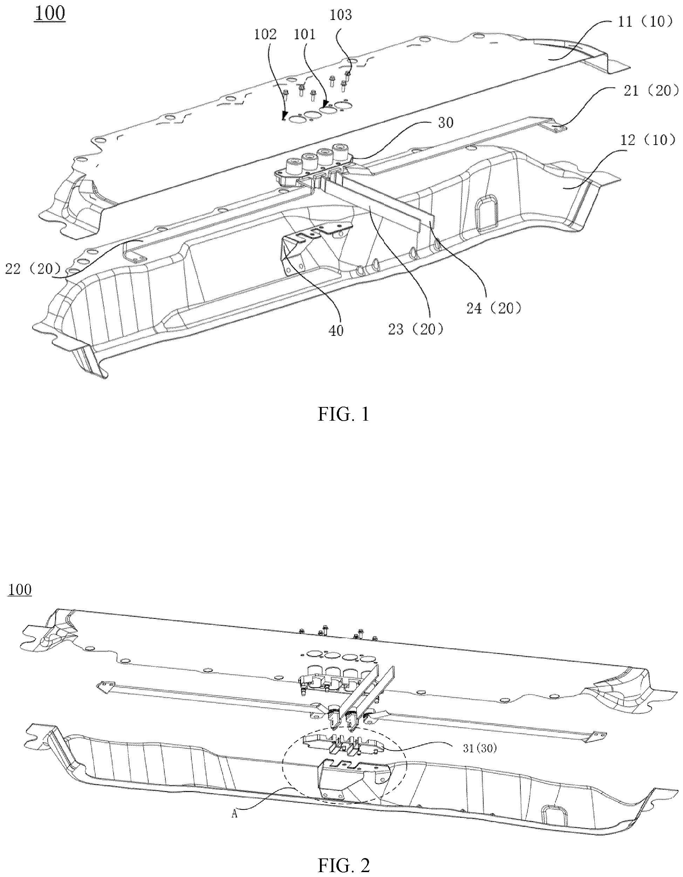

As shown in FIGs. 1 and 2, the embodiments of the present disclosure provide a power battery pack 100 that includes a case 10, a conductive member 20, a high-voltage connector 30, a battery (not shown in FIG. 1), and a limiting frame 40.

The case 10 is configured to accommodate the conductive member 20, the high-voltage connector 30, the battery, and the limiting frame 40. The case 10 includes an upper case 11 and a lower case 12, and the upper case 11 and the lower case 12 are interlocked to form an accommodating cavity for accommodating the conductive member 20, the high-voltage connector 30, the battery and the limiting frame 40. The upper case 11 and the lower case 12 are fixedly connected by welding or bolting.

The lower case 12 may be provided with a hollow structure having an opening one one side. The upper case 11 may be provided with a plate-shaped structure. The upper case 11 caps the opening side of the lower case 12 so that the upper case 11 and the lower case 12 together define the accommodating cavity. Both the upper case 11 and the lower case 12 may be provided with a hollow structure having an opening on one side, and the opening side of the upper case 11 caps the opening side of the lower case 12. Of course, the case 10 formed by the upper case 11 and the lower case 12 may be of various shapes such as a cylinder a cuboid or the like.

An opening 101 is defined in the top wall of the case 10. A part of the high-voltage connector 30 is exposed outside the case 10 from the opening 101, so that the high-voltage connector 30 transmits power electric energy to an external electrical device. The top wall of the case 10 is further provided with a plurality of fastening grooves 102, and a plurality of bolts 103 are assembled in the fastening grooves 102 one-to-one, so that the top wall of the case 10 and the high-voltage connector 30 can be fixedly connected.

The conductive member 20 is disposed in the case 10, and is used for realizing the electrical connection between the high-voltage connector 30 and the battery. The conductive member 20 includes a total positive electrode conductive row 21, a total negative electrode conductive row 22, a sub-positive electrode conductive row 23 and a sub-negative electrode conductive row 24. An extension direction of the total positive electrode conductive row 21 is the same as that of the total negative electrode conductive row 22. An extension direction of the sub-positive electrode conductive row 23 is the same as that of the sub-negative electrode conductive row 24. The extension direction of the total positive electrode conductive row 21 intersects the extension direction of the sub-positive electrode conductive row 23. For example, the extension direction of the total positive electrode conductive row 21 is a length direction of the case 10, and the extension direction of the sub-positive electrode conductive row 23 is a width direction of the case 10.

The conductive member 20 may be made of copper or aluminum, both of which are metal materials with good conductivity, the conductivity of copper is better than that of aluminum, and the density of copper is higher than that of aluminum, but the cost of making the copper conductive member is higher than that of making the aluminum conductive member.

One end of the total positive electrode conductive row 21 is connected to a positive terminal of the high-voltage connector 30, and another end of the total positive electrode conductive row 21 is connected to a positive electrode of the battery. One end of the total negative electrode conductive row 22 is connected to a negative terminal of the high-voltage connector 30, and another end of the total negative electrode conductive row 22 is connected to a negative electrode of the battery. One end of the sub-positive electrode conductive row 23 is connected to the positive terminal of the high-voltage connector 30, and another end of the sub-positive electrode conductive row 23 is connected to the negative electrode of the battery. One end of the sub-negative electrode conductive row 24 is connected to the negative terminal of the high-voltage connector 30, and the other end of the sub-negative electrode conductive row 24 is connected to the negative electrode of the battery.

A plurality of batteries may be provided by the present disclosure. The plurality of batteries may be connected in series, in parallel or in series-parallel connection, and the series-parallel connection refers to both series and parallel in the plurality of batteries. The plurality of batteries may be directly connected in series, in parallel or in series-parallel connection, and the whole body composed of the plurality of batteries is accommodated in the case 10. Of course, the batteries in the power battery pack 100 may be in the form of a plurality of battery modules composed of a plurality of batteries in series, in parallel or in series-parallel connection, and the battery modules are then integrated in series, in parallel or in series-parallel connection, and are accommodated in the case 10. The power battery pack 100 may further include other configurations.

As shown in FIGs. 1, 2, and 3, the high-voltage connector 30 further includes a base 31. The conductive member 20 is disposed on a first surface 3101 of the base 31. The base 31 is insulated from the conductive member 20, so that the total positive electrode conductive row 21 and the sub-positive electrode conductive row 23 in the conductive member 20 are connected to the positive terminal of the high-voltage connector 30, and the total negative conductive row 22 and the sub-negative conductive row 24 in the conductive member 20 are connected to the negative terminal of the high-voltage connector 30. The first surface 3101 of the base 31 faces to the top wall of the case 10, and the plane of the first surface 3101 is parallel to the plane of the top wall of the case 10, that is, the direction of self-gravity of the high-voltage connector 30 is perpendicular to the plane of the first surface 3101. The direction of self-gravity of the conductive member 20 is perpendicular to the plane of the first surface 3101. The plane of the second surface 3102 of the base 31 is parallel to the plane of the top wall of the case 10. The second surface 3102 of the base 31 is opposite to the first surface 3101 of the base 31, that is, the direction of the self-gravity of the high-voltage connector 30 is perpendicular to the plane of the second surface 3102. The direction of the self-gravity of the conductive member 20 is perpendicular to the plane of the second surface 3102.

The limiting frame 40 is attached to the sidewall of the case 10 so that the limiting frame 40 is fixedly provided on the sidewall of the case 10. The limiting frame 40 and the case 10 may be fixedly connected by bolting, or the limiting frame 40 and the case 10 may be fixedly connected by welding. The welding process may be a resistance spot welding process. The resistance spot welding process can prevent the sidewall of the case 10 from being welded through when the limiting frame 40 and the sidewall of the case 10 are welded, thereby ensuring the air tightness of the case 10 and reducing the possibility that external water vapor invades the inside of the power battery pack 100 through the case 10, thereby reducing the corrosion of the inside of the case 10 by water vapor.

The limiting frame 40 is further connected to at least a second surface 3102 of the base 31 to support and limit the base 31. Based on the connection between the limiting frame 40 and the base 31 of the high-voltage connector 30, the limiting frame 40 supports the base 31, so that the limiting frame 40 limits and supports the base 31 of the high-voltage connector 30 in the gravity direction of the high-voltage connector 30, that is, in the gravity direction of the conductive member 20.

Since the limiting frame 40 limits the high-voltage connector 30 in the gravity direction of the conductive member 20, the limiting frame 40 can limit the conductive member 20 to pull the high-voltage connector 30 in the direction of the self-gravity. It is can be ensured that the high-voltage connector 30 does not shake in the direction of the external force, that is, the high-voltage connector 30 does not shake in the gravity direction of the conductive member 20, thereby preventing the connection between the high-voltage connector 30 and the conductive member 20 and the connection between the high-voltage connector 30 and the top wall of the case 10 from loosening due to shaking, thereby ensuring the stability of the electrical connection between the high-voltage connector and the battery.

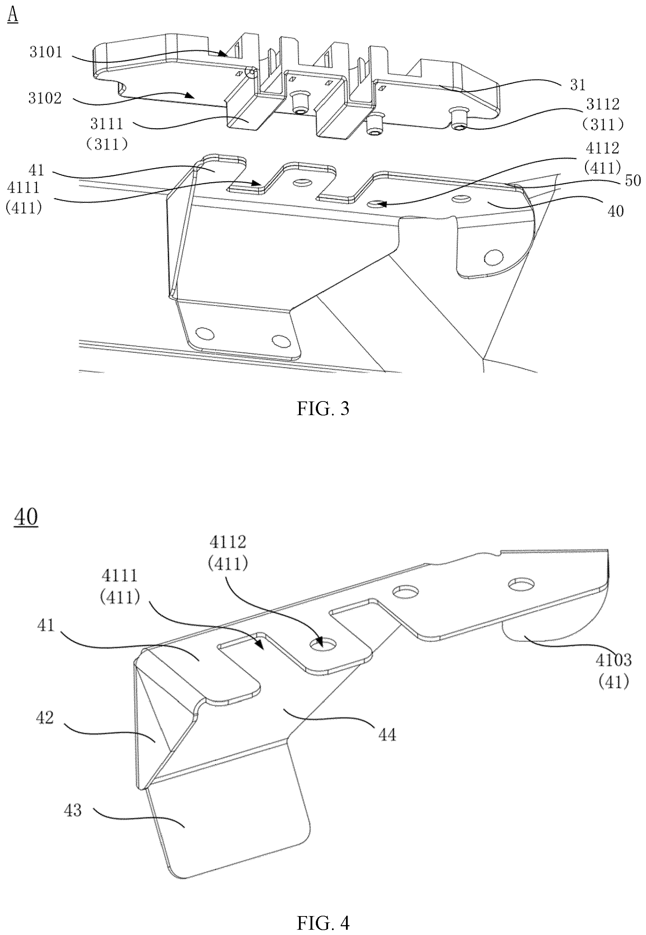

As shown in FIGs. 3 to 5, the limiting frame 40 includes a support plate 41. The support plate 41 is provided with a limit portion 411, and the limit portion 411 is nested with at least a part of the base 31. The base 31 has a protrusion 311, and the limiting part 411 is nested with the protrusion 311 of the base 31.

Similarly, in other embodiments, the support plate 41 includes bumps and the base 31 includes grooves, and the bumps of the support plate 41 are nested with the grooves of the base 31.

The plane where the support plate 41 is located is parallel to the plane where the second surface of the base 31 is located. The direction of the self-gravity of the base 31 is perpendicular to the plane where the support plate 41 is located, so that the interaction force exerted on the support plate 41 from the base 31 is perpendicular to the plane where the support plate 41 is located. Therefore, the support plate 41 supports and limits the base 31 of the high-voltage connector 30 in the gravity direction of the high-voltage connector 30, that is, in the gravity direction of the conductive member 20, so as to present the high-voltage connector 30 from being shaking in the direction of the self-gravity of the conductive member 20.

The limiting part 411 includes a first limiting sub-part 4111 formed by a recess of the side edge of the support plate 41, that is, the peripheral edge of the first limiting sub-part 4111 is not closed. The support plate 41 may include a plurality of first limiting sub-parts 4111. The plurality of first limiting sub-parts 4111 may be provided on the same side edge of the support plate 41, or the plurality of first limiting sub-parts 4111 may be provided on different side edges of the support plate 41. An orthographic projection patterns of the first limiting sub-parts 4111 may have different shapes such as a semicircle, a cone, a U-shape, or a U-like shape. The orthographic projection patterns of the first limiting sub-part 4111 may be regular patterns or irregular patterns.

The protrusion 311 includes a first protrusion 3111, which is nested with a first limiting sub-part 4111 of the support plate 41. Since the first limiting sub-part 4111 is formed by the recess of the side edge of the support plate 41, and the recess direction of the side edge of the support plate 41 is taken as the first direction, the nesting of the first protrusion 3111 and the first limiting sub-part 4111 can prevent the base 31 from shaking in a second direction in the plane where the support plate 41 is located. The second direction intersects with the first direction, and the plane formed by the intersection of the second direction and the first direction is parallel to the plane where the support plate 41 is located. In condition that the width of the first protrusion 3111 is smaller than or equal to the width of the first limiting sub-part 4111, and the width of the first protrusion 3111 is equal to the width of the first limiting sub-part 4111, the side surface of the first protrusion 3111 abuts against the first limiting sub-part 4111.

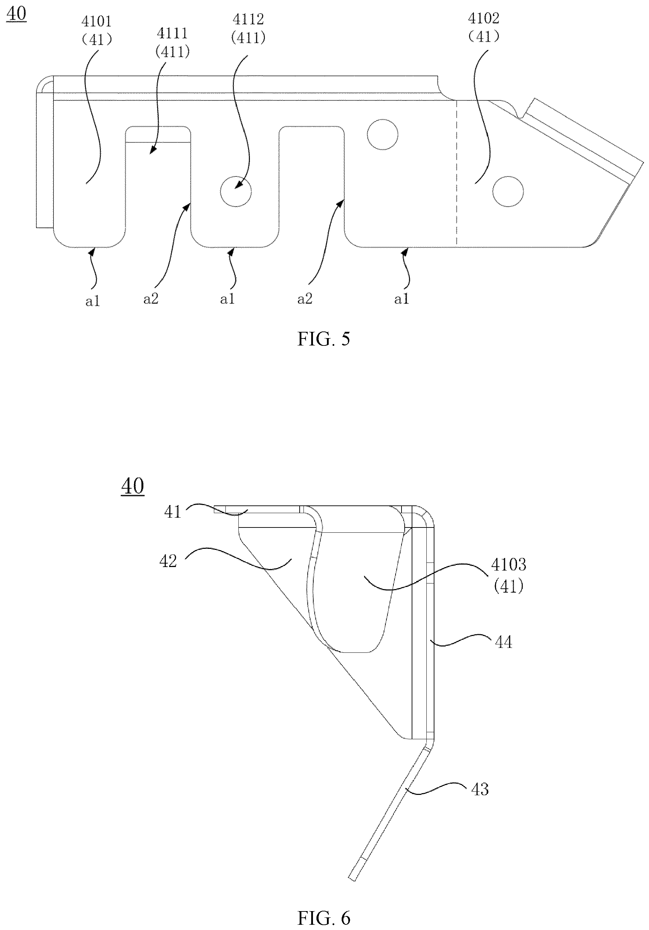

As shown in FIG. 5, the side edge of the support plate 41 include a first sub-side edge a1 and a second sub-side edge a2 and the second sub-side edge a2 is recessed to form the first limiting sub-part 4111. The first sub-side edge a1 and the second sub-side edge a2 are smoothly connected to each other, that is, the portion where the first sub-side edge a1 and the second sub-side edge a2 are connected is arc-shaped, so that the protrusion 311 is smoothly nested in the first sub-limiting part 4111.

The limiting part 411 further includes a second limiting sub-part 4112 which is provided on the support plate 41 and has a closed periphery, that is, the second limiting sub-part 4112 is hole-shaped. The support plate 41 may include a plurality of second limiting sub-parts 4112 and the number of the second limiting sub-parts 4112 may be set according to actual needs. The orthographic projection patterns of the second limiting sub-parts 4112 may have different shapes such as a closed circle or a closed polygon. The orthographic projection patterns of the second limiting sub-parts 4112 may be regular patterns or irregular patterns.

The protrusion 311 includes a second protrusion 3112 nested with the second limiting sub-part 4112 of the support plate 41. Since the second limiting sub-part 4112 has a closed periphery, the nesting of the second protrusion 3112 with the second limiting sub-part 4112 can restrict the base 31 in any direction in the plane where the support plate 41 is located. In condition that the diameter of the second protrusion 3112 is smaller than or equal to the diameter of the second limiting sub-part 4112, and the diameter of the second protrusion 3112 is equal to the diameter of the second limiting sub-part 4112, the side surface of the second protrusion 3112 abuts against the second limiting sub-part 4112.

As shown in FIGs. 1 to 6, the limiting frame 40 further includes a first connecting plate 43 attached to a sidewall of the case 10 and a second connecting plate 44 connected to the first connecting plate 43, and the second connecting plate 44 is connected to the support plate 41. The first connecting plate 43 is attached to the sidewall of the case 10 to achieve a fixed connection between the first connecting plate 43 and the sidewall of the case 10. The second connecting plate 44 is respectively connected to the first connecting plate 43 and the support plate 41. The second connecting plate 44 supports the support plate 41 and at the same time facilitates adjusting the angle of the plane where the support plate 41 is located with respect to the plane where the top wall of the case 10 is located.

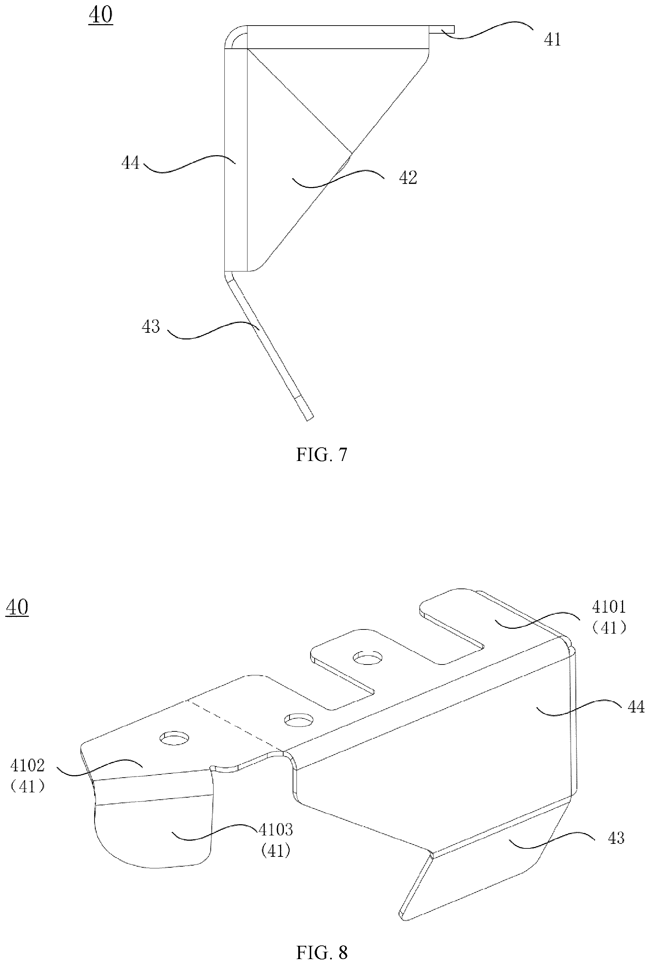

As shown in FIGs. 6 and 7, the included angle between the plane where the second connecting plate 44 is located and the plane where the support plate 41 is located may be a right angle so that the plane where the support plate 41 is located is parallel to the plane where the top wall of the case 10 is located, so that when placed on the limiting frame 40, the base 31 of the high-voltage connector 30 will does not shake on the plane where the support plate 41 is located due to the influence of the self-gravity of the conductive member 20. The right angle in the embodiments of the present disclosure refers to an angle in the specific range of 85° to 95°, and specifically, the right angle may be 85°, 86°, 87°, 88°, 89°, 90°, 91°, 92°, 93°, 94°, or 95°.

A first included angle is formed between the second connecting plate 44 and the first connecting plate 43, The first included angle is an obtuse angle. The specific range of the first included angle is from 100° to 165°. Specifically, the first included angle may be 165°, 160°, 155°, 150°, 145°, 140°, 135°, 130°, 125°, 120°, 115°, 110°, 105°, or 100°. The first included angle between the second connecting plate 44 and the first connecting plate 43 is the obtuse angle, which facilitates the connection between the first connecting plate 43 and the sidewall of the case 10.

The limiting frame 40 further includes a reinforcing plate 42 connected to the support plate 41 and further connected to the second connecting plate 44. Based on the arrangement of the reinforcing plate 42, it can be ensured that the connection between the second connecting plate 44 and the support plate 41 is not easily changed even under the action of an external force.

The support plate 41 includes a support main body plate 4101 and a support extension plate 4102. The orthographic projection of the support main body plate 4101 is located in the orthographic projection of the base 31, so that the support main body plate 4101 is connected to the second connecting plate 44, with a maximum effective connecting area between the support plate 41 and the second connecting plate 44, which is beneficial to realizing the connection stability between the second connecting plate 44 and the support plate 41. If only the support body plate 4101 is provided in the support plate 41, the support body plate 4101 will not be in contact with or not be connected to the sidewall of the case 10, thereby affecting the stability of the support plate 41 in providing a support limit to the base 31. Based on the above, in the embodiment of the present disclosure, the support plate 41 further includes a support extension plate 4102 which is connected to the support main body plate 4101 and which abuts against the sidewall of the case 10. Based on the arrangement of the support extension plate 4102, the support plate 41 can abut against the sidewall of the case 10, thereby further enhancing the stability of the support plate 41 in providing a support limit to the base 31. The limiting parts 411 may be provided in the support main body plate 4101, the limiting parts 411 may be provided in the support extension plate 4102, or the limiting parts 411 may be provided in both the support main body plate 4101 and the support extension plate 4102.

The support extension plate 4102 may have a regular pattern, and the support extension plate 4102 may have an irregular pattern. The support body plate 4101 may have a regular pattern, and the support body plate 4101 may have an irregular pattern.

As shown in FIGs. 1 to 6, the support plate 41 further includes an extension connecting plate 4103 connected to the support extension plate 4102 and attached to the sidewall of the case 10. Based on the arrangement of the extension connecting plate 4103, the support plate 41 is connected to the case 10 through the extension connecting plate 4103, thereby further strengthening the stability of the support plate 41 in providing a support limit to the base 31, so that the support plate 41 can be directly connected to the case 10 while supporting the base 31. The side edge of the support extension plate 4102 in contact with the sidewalls of the case 10 is connected to the extension connecting plate 4103 so that the support main plate 4101, the support extension plate 4102, and the extension connecting plate 4103 can be integrally formed. As shown in FIGs. 7 and 8, the support plate 41 includes a support body plate 4101. The support plate 4101 includes a first side edge, a second side edge, a third side edge and a fourth side edge. The first side edge of the support body plate 4101 is opposite to the second side edge, the third side edge of the support body plate 4101 is opposite to the fourth side edge. The first side edge, the third side edge, the second side edge and the fourth side edge of the support body plate 4101 are connected in turn to form the side edge of the support body plate 4101. The first side edge of the support body plate 4101 is connected to the support extension plate 4102. The second side edge of the support body plate 4101 is connected to the reinforcing plate 42. The third side edge of the support body plate 4101 is connected to the second connecting plate 44. The fourth side edge of the support body plate 4101 is recessed to form a first limiting sub-part 4111.

The first side edge of the second connecting plate 44 is connected to the third side edge of the supporting body plate 4101. The second side edge of the second connecting plate 44 is connected to the reinforcing plate 42. The third side edge of the second connecting plate 44 is connected to the first connecting plate 43. The first side edge of the second connecting plate 44 is opposite to the third side edge of the second connecting plate 44. The second side edge of the second connecting plate 44 is connected to the first side edge of the second connecting plate 44 and the third side edge of the second connecting plate 44, respectively. The second side edge of the second connecting plate 44 is flush with the third side edge of the supporting body plate 4101 so that the second connecting plate 44 and the supporting body plate 4101 are integrally formed.

A first side edge of the first connecting plate 43 is connected to a third side edge of the second connecting plate 44, and the second side edge of the first connecting plate 43 is adjacent to the first side edge of the first connecting plate 43. And the second side edge of the first connecting plate 43 is flush with the second side edge of the second connecting plate 44 so that the first connecting plate 43 and the second connecting plate 44 are integrally formed.

In some embodiments, the support plate 41, the first connecting plate 43, the second connecting plate 44, and the reinforcing plate 42 of the limiting frame 40 are integrally formed. If the limiting frame 40 is stamped and formed by sheet metal processing, the processing time required for preparing the limiting frame 40 can be reduced and the production cost can be saved.

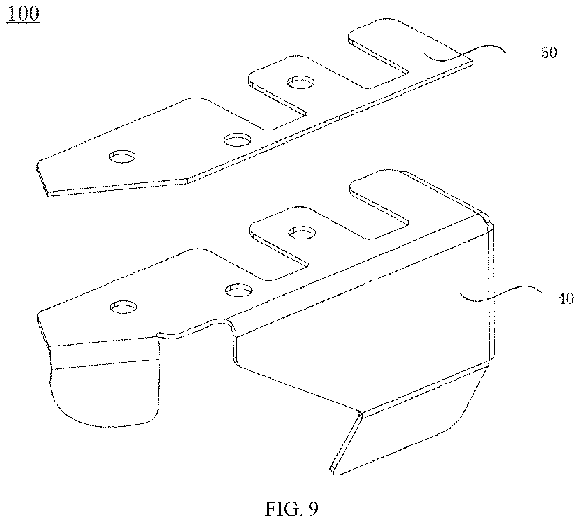

In some embodiments, as shown in FIG. 1, FIG. 2, and FIG. 9, a buffer layer 50 is provided in the power battery pack 100, and the buffer layer 50 is provided between the limiting frame 40 and the base 31, in order to prevent a gap from being formed between the limiting frame 40 and the base 31. The buffer layer 50 can attenuate the impact of the base 31 on the limiting frame 40 and prevent the limiting frame 40 from shaking. The buffer layer 50 may be made of buffer foam, or the buffer layer 50 may be made of a material such as rubber or sponge. An orthographic projection of the buffer layer 50 may only coincide with the orthographic projection of the support body plate 4101, which insures that the buffer layer 50 is provided in an area where the orthographic projection of the base 31 coincides with the orthographic projection of the support plate 41, so as to reduce the impact of the base 31 on the limiting frame 40. The orthographic projection of the buffer layer 50 may coincide with an orthographic projection of the support body plate 4101 and the support extension plate 4102, so as to ensure that the buffer layer 50 is provided in the area corresponding to the surface of the support plate 41 supporting the base 31, so as to reduce the impact of the base 31 on the limiting frame 40.

Of course, the present disclosure may have a variety of other embodiments, and those skilled in the art may make various corresponding changes and modifications based on the present disclosure without departing from the spirit and essential points of the present disclosure, and all these corresponding changes and modifications should be considered within the protection scope of the attached claims of the present disclosure.

## Claims

1. A power battery pack (100), **characterized in that** the power battery pack (100) comprises a case (10), a high-voltage connector (30) and a limiting frame (40) disposed in the case (10);
wherein the high-voltage connector (30) comprises a base (31), and a first surface (3101) of the base (31) faces to a top wall of the case (10); and
the limiting frame (40) is attached to a sidewall of the case (10), the limiting frame (40) is at least connected to a second surface (3102) of the base (31) to limit the base (31), and the first surface (3101) of the base (31) is opposite to the second surface (3102) of the base (31).

2. The power battery pack (100) according to claim 1, **characterized in that** the limiting frame (40) comprises a support plate (41), the support plate (41) is provided with a limiting part (411), and the limiting part (411) is nested with at least a part of the base (31).

3. The power battery pack (100) according to claim 2, **characterized in that** the limiting part (411) comprises a first limiting sub-part (4111), and a side edge of the support plate (41) is recessed to form the first limiting sub-part (4111).

4. The power battery pack (100) according to claim 3, **characterized in that** the side edge comprises a first sub-side edge (a1) and a second sub-side edge (a2), the first sub-side edge (a1) is smoothly connected to the second sub-side edge (a2), and the second sub-side edge (a2) is recessed to form the first limiting sub-part (4111).

5. The power battery pack (100) according to any one of claims 2 to 4, **characterized in that** the limiting part (411) further comprises a second limiting sub-part (4112) in a shape of a hole.

6. The power battery pack (100) according to any one of claims 2 to 4, **characterized in that** the base (31) comprises a protrusion (311), and the protrusion (311) is nested with the limiting part (411).

7. The power battery pack (100) according to any one of claims 2 to 4, **characterized in that** the limiting frame (40) further comprises a first connecting plate (43) and a second connecting plate (44), the first connecting plate (43) is attached to the sidewall of the case (10), the second connecting plate (44) is connected to the first connecting plate (43), and the second connecting plate (44) is connected to the support plate (41).

8. The power battery pack (100) according to claim 7, **characterized in that** a first included angle is formed between the second connecting plate (44) and the first connecting plate (43), and the first included angle is an obtuse angle.

9. The power battery pack (100) according to claim 7, **characterized in that** the limiting frame (40) further comprises a reinforcing plate (42), the reinforcing plate (42) is connected to the support plate (41), and the reinforcing plate (42) is connected to the second connecting plate (44).

10. The power battery pack (100) according to claim 9, **characterized in that** the support plate (41), the first connecting plate (43), the second connecting plate (44) and the reinforcing plate (42) are integrally formed.

11. The power battery pack (100) according to claim 7, **characterized in that** the support plate (41) comprises a support main body plate (4101) and a support extension plate (4102), the support main body plate (4101) is connected to the support extension plate (4102), the support extension plate (4102) abuts against the sidewall of the case (10), the support main body plate (4101) is connected to the second connecting plate (44), and at least one of the support main body plate (4101) and the support extension plate (4102) is provided with the limiting part (411).

12. The power battery pack (100) according to claim 11, **characterized in that** the support plate (41) further comprises an extension connecting plate (4103) connected to the support extension plate (4102), and the extension connecting plate (4103) is attached to the sidewall of the case (10).

13. The power battery pack (100) according to any one of claims 1 to 4, **characterized in that** the power battery pack (100) further comprises a buffer layer (50), and the buffer layer (50) is disposed between the limiting frame (40) and the base (31).

14. The power battery pack (100) according to claim 13, **characterized in that** an orthographic projection of the buffer layer (50) coincides with an orthographic projection of the support body plate (4101), or the orthographic projection of the buffer layer (50) coincides with an orthographic projection of the support body plate (4101) and the support extension plate (4102).

15. The power battery pack (100) according to claim 1, **characterized in that** the power battery pack further comprises a conductive member (20) and a battery disposed in the case (10), the high-voltage connector (30) is connected to the conductive member (20) to suspend and support the high-voltage connector (30) in the case (10), and the conductive member (20) is connected to the battery.
